# EUROPÄISCHE PATENTANMELDUNG

(11) **EP 3 427 578 A1**
(43) Veröffentlichungstag der Anmeldung: **16.01.2019**
(21) Anmeldenummer: 18190778.3
(22) Anmeldetag: 03.11.2014
(51) Int. Cl.: A01K 9/00, A01K 5/02

(54) **SAUGNUCKELANORDNUNG FÜR EINEN TRÄNKEAUTOMATEN**

(62) Teilanmeldung aus: 14191484.6
(71) Anmelder: Holm, Hans Joachim, 24784 Westerrönfeld (DE); Laue, Hans-Joachim, 24783 Osterrönfeld (DE)
(72) Erfinder: Holm, Hans Joachim, 24784 Westerrönfeld (DE); Laue, Hans-Joachim, 24783 Osterrönfeld (DE)
(74) Vertreter: Hauck Patentanwaltspartnerschaft mbB

(57) **Zusammenfassung**

Saugnuckelanordnung (38) für einen Tränkeautomaten (10) zur Fütterung von Nutztieren, insbesondere Kälbern, mit
• einer Saugnuckelhalterung (18), die eine Saugnuckelaufnahme (54) zur Aufnahme eines Saugnuckels (16), eine Befestigungseinrichtung (44) zur Befestigung der Saugnuckelhalterung an einem Futterstand und einen Versorgungsanschluss (22) zur Verbindung mit einer Versorgungsleitung (50) aufweist,
• einem Ventil (42), mit dem eine Flüssigkeitszufuhr aus der Versorgungsleitung zu dem Saugnuckel freigegeben und gesperrt werden kann, und
• einem Abzweiganschluss (24) zur Verbindung mit einer Abzweigleitung, dadurch gekennzeichnet, dass
• das Ventil und der Abzweiganschluss in die Saugnuckelhalterung integriert sind.

## Beschreibung

Die Erfindung betrifft eine Saugnuckelanordnung für einen Tränkeautomaten zur Fütterung von Nutztieren, insbesondere Kälbern. Bei der Fütterung von Kälbern mit Tränkeautomaten werden hohe hygienische Anforderungen gestellt. Das Futtermittel wird in der Regel für jeden einzelnen Fütterungsvorgang auf der Basis von Milchpulver frisch angemischt. Durch Saugen an einem Saugnuckel kann ein Kalb seine Futtermittelration über eine Versorgungsleitung aus einem Anmischbehälter saugen. Der Ablauf eines solchen Fütterungsvorgangs entspricht weitgehend dem natürlichen Trinkverhalten eines Kalbs. Anmischbehälter, Saugnuckel und Versorgungsleitung werden regelmäßig gereinigt, insbesondere durch Spülen mit Wasser und/oder Reinigungsflüssigkeit. Dabei sollte verhindert werden, dass ein Kalb mit der Reinigungsflüssigkeit in Berührung kommt bzw. bei einem nachfolgenden Fütterungsvorgang Reinigungsmittel aufnimmt.

Aus der Druckschrift DE 199 57 969 C1 ist eine Saugnuckelanordnung mit einem Tränkeautomaten bekannt geworden. In einer Versorgungsleitung, die einen Anmischbehälter mit dem an einem Futterstand befestigten Saugnuckel verbindet, ist ein Absperrventil angeordnet. Zwischen dem Anmischbehälter und dem Absperrventil weist die Versorgungsleitung einen Abzweiganschluss an, an den eine Abzweigleitung, in der sich eine Pumpe befindet, angeschlossen ist. Zur Reinigung der bekannten Vorrichtung wird eine Reinigungsflüssigkeit in den Anmischbehälter gegeben und mittels der Pumpe zunächst über die Versorgungsleitung in die Abzweigleitung gefördert. Anschließend wird die Förderrichtung der Pumpe umgekehrt. Ein Zurückströmen des Reinigungsmittels aus der Abzweigleitung zum Anmischbehälter wird durch ein Rückschlagventil verhindert. Das Reinigungsmittel gelangt dann bei geöffnetem Absperrventil aus der Abzweigleitung von dem Abzweiganschluss über den nachgeordneten Teil der Versorgungsleitung zum Saugnuckel. Um einen Kontakt eines Tieres mit dem Reinigungsmittel zu verhindern, wird der Saugnuckel während des Reinigungsvorgangs nach oben geschwenkt und von einem Abdeckblech abgedeckt.

Davon ausgehend ist es die Aufgabe der Erfindung, eine Saugnuckelanordnung zur Verfügung zu stellen, die einfacher gefertigt, montiert und gereinigt werden kann.

Diese Aufgabe wird gelöst durch die Saugnuckelanordnung mit den Merkmalen des Anspruchs 1. Vorteilhafte Ausgestaltungen sind in den sich anschließenden Unteransprüchen angegeben.

Die Saugnuckelanordnung ist für einen Tränkeautomaten zur Fütterung von Nutztieren, insbesondere Kälbern, vorgesehen und hat
- eine Saugnuckelhalterung, die eine Saugnuckelaufnahme zur Aufnahme eines Saugnuckels, eine Befestigungseinrichtung zur Befestigung der Saugnuckelhalterung an einem Futterstand und einen Versorgungsanschluss zur Verbindung mit einer Versorgungsleitung aufweist,
- ein Ventil, mit dem eine Flüssigkeitszufuhr aus der Versorgungsleitung zu dem Saugnuckel freigegeben und gesperrt werden kann, und
- einen Abzweiganschluss zur Verbindung mit einer Abzweigleitung, wobei
- das Ventil und der Abzweiganschluss in die Saugnuckelhalterung integriert sind.

Der Futterstand kann ein Teil eines Tränkeautomaten sein oder eine Wand oder ein sonstiger Träger an einem Fütterungsplatz, beispielsweise eine Wandung einer Kälberbox in einem Stall. Daran wird die Saugnuckelhalterung mit einer Befestigungseinrichtung befestigt. Die Befestigungseinrichtung kann beispielsweise ein Befestigungsflansch, eine Bohrung, eine Klemmbefestigung, ein Gewinde oder eine sonstige Schraubbefestigung sein.

Der Versorgungsanschluss dient zur Verbindung mit einer Versorgungsleitung, die insbesondere mit einem Anmischbehälter verbunden ist. Der Versorgungsanschluss kann beispielsweise ein Stutzen für einen Schlauch oder ein Rohrleitungsanschluss sein. Der Abzweiganschluss dient zur Verbindung mit einer Abzweigleitung, die insbesondere zu einem Abfluss oder zurück zum Anmischbehälter führen kann. Der Abzweiganschluss kann ebenfalls ein Stutzen für einen Schlauch oder ein Rohrleitungsanschluss sein.

Mit dem Ventil kann die Flüssigkeitszufuhr aus der Versorgungsleitung zu dem Saugnuckel freigegeben und gesperrt werden. Dadurch kann einerseits die Zufuhr von Futtermittel gesteuert werden. Andererseits kann durch Absperren des Ventils verhindert werden, dass eine Reinigungsflüssigkeit zum Saugnuckel gelangt.

Bei der Erfindung ist nicht nur der Versorgungsanschluss, sondern auch das Ventil und der Abzweiganschluss sind in die Saugnuckelhalterung integriert. Diese drei Elemente, durch die das Futtermittel und auch eine Reinigungsflüssigkeit geleitet werden sollen, sind daher äußerst kompakt angeordnet. Insbesondere kann eine über den Versorgungsanschluss zugeführte und über den Abzweiganschluss abgeführte Reinigungsflüssigkeit die Saugnuckelhalterung bis fast unmittelbar oder unmittelbar an den Saugnuckel heran durchströmen.

Anders als bei der eingangs geschilderten, aus dem Stand der Technik bekannten Anordnung sind das Ventil und der Abzweiganschluss auf engstem Raum angeordnet und gleichzeitig sehr nahe am Saugnuckel. Insbesondere gibt es zwischen dem Saugnuckel und dem Ventil mit Ausnahme etwaiger, in die Saugnuckelhalterung integrierter Leitungsabschnitte keinen Versorgungsleitungsabschnitt. Es ist daher möglich, die gesamte Anordnung bis auf den Saugnuckel selbst und gegebenenfalls Teile einer Saugnuckelaufnahme, bei geschlossenem Ventil vollständig zu reinigen, ohne dass Reinigungsmittel zum Saugnuckel gelangt.

Soll auch der Saugnuckel selbst in die Reinigung einbezogen werden, ist dies bei geöffnetem Ventil möglich. Während eines solchen Reinigungsvorgangs sollte kein Tier Zugang zu dem Saugnuckel haben. Um dies zu gewährleisten, kann die Saugnuckelanordnung mit einer Zugangssperre versehen sein. Wegen der unmittelbar benachbarten Anordnung von Saugnuckel und Ventil wird nur wenig Reinigungsflüssigkeit und wenig Flüssigkeit für ein Nachspülen benötigt. Der Reinigungsvorgang der Saugnuckelanordnung kann dadurch besonders schnell und sparsam durchgeführt werden.

Ein weiterer Vorteil ist, dass durch die Integration von Abzweiganschluss und Ventil in die Saugnuckelhalterung die gesamte Saugnuckelanordnung eine kompakte, vormontierbare Einheit bildet, die besonders einfach an einem Tränkeautomaten installiert werden kann. Insbesondere ist keine gesonderte Befestigung des Ventils an dem Futterstand erforderlich, und auch keine separate Verbindungsleitung zwischen Ventil und Saugnuckel.

In einer Ausgestaltung weist die Saugnuckelaufnahme einen mit einer Durchgangsöffnung versehenen Schaftabschnitt auf, auf den eine rückwärtige Öffnung eines Saugnuckels aufsteckbar ist. Herkömmliche Saugnuckel weisen häufig einen Befestigungsflansch auf, der mit einer Überwurfmutter dichtend befestigt wird. Das Aufstecken des Saugnuckels auf einen Schaftabschnitt der Saugnuckelaufnahme, der in die rückwärtige Öffnung des Saugnuckels eingreift, wobei eine Abdichtung zwischen dem Schaftabschnitt und der Innenseite des Saugnuckels entsteht, stellt eine besonders einfache Alternative dar. Zusätzlich kann der Saugnuckel einen Flansch aufweisen.

In einer Ausgestaltung weist das Ventil ein verstellbares Ventilglied und einen Ventilsitz auf, der von der Saugnuckelaufnahme gebildet ist. Somit wirkt die einoder mehrteilig ausgebildete Sockelaufnahme selbst als Ventilsitz, und Saugnuckelaufnahme und Ventilglied sind zu einer besonders kompakten Einheit zusammengefasst.

In einer Ausgestaltung ist der Ventilsitz an einem Rand der Durchgangsöffnung ausgebildet. In diesem Fall kann die Saugnuckelaufnahme bevorzugt einteilig ausgebildet sein. Das Ventil dichtet dann sehr nahe am Saugnuckel ab, sodass selbst bei geschlossenem Ventil die gesamte Saugnuckelanordnung mit Ausnahme des Saugnuckelinneren gereinigt werden kann.

In einer Ausgestaltung ist das Ventil zwischen dem Abzweiganschluss und dem Versorgungsanschluss angeordnet. Bei einem Reinigungsvorgang, bei dem die Reinigungsflüssigkeit bei geschlossenem Ventil vom Abzweiganschluss zum Versorgungsanschluss oder umgekehrt strömt, werden demnach Teile des Ventils von der Reinigungsflüssigkeit umspült, was eine besonders gründliche Reinigung bewirkt. Damit, dass das Ventil zwischen den beiden Anschlüssen angeordnet ist, ist nicht gemeint, dass seine Absperrwirkung die beiden Anschlüsse voneinander trennt. Teile des Ventils befinden sich jedoch zwischen den beiden Anschlüssen, sodass sie bei einer Strömung zwischen den beiden Anschlüssen umspült werden.

In einer Ausgestaltung weist die Saugnuckelanordnung einen Hohlraum auf, in den der Versorgungsanschluss, der Abzweiganschluss und die Durchgangsöffnung des Schaftabschnitts münden. Über den Hohlraum sind der Versorgungsanschluss und der Abzweiganschluss unabhängig von der Ventilstellung miteinander verbunden. Die Verbindung zur Durchgangsöffnung des Schaftabschnitts kann von dem Ventil abgesperrt werden. Die Ausbildung eines Hohlraums, an dem alle drei genannten Elemente zusammentreffen, ermöglicht eine vollständige Reinigung der Saugnuckelanordnung bei geschlossenem Ventil mit Ausnahme der jenseits der Durchgangsöffnung angeordneten Elemente, insbesondere des Saugnuckels selbst.

In einer Ausgestaltung ist das verstellbare Ventilglied in dem Hohlraum angeordnet. Dadurch wird auch das Ventilglied von der Reinigung erfasst, wenn Reinigungsflüssigkeit durch den Hohlraum geleitet wird. Insbesondere können der Abzweiganschluss und der Versorgungsanschluss auf einander gegenüberliegenden Seiten in den Hohlraum münden. Beispielsweise kann der Hohlraum ring- oder scheibenförmig ausgebildet sein, wobei das verstellbare Ventilglied in der Mitte des Rings bzw. der Scheibe angeordnet ist. Die Durchgangsöffnung kann sich bezogen auf den ringoder scheibenförmigen Hohlraum in Axialrichtung erstrecken. Der Abzweiganschluss und der Versorgungsanschluss können bezogen auf den ring- oder scheibenförmigen Hohlraum radial angeordnet sein.

In einer Ausgestaltung weist das Ventil einen variablen Öffnungsquerschnitt auf, der stufenlos oder in mindestens drei Stufen einstellbar ist. Die Saugnuckelanordnung kann eine Steuerung aufweisen, die für einen Fütterungsvorgang eine gewünschte Ventilstellung einstellt, zum Beispiel mit einem Schrittmotor. Dies kann insbesondere für jedes Tier individuell geschehen, zum Beispiel nach Erkennen eines Tiers mittels eines Transponders und/oder in Abhängigkeit vom Alter oder einem bekannten Saugverhalten des Tiers. Grundsätzlich kann auch ein Ventil verwendet werden, dass lediglich zwischen einer vollständig geöffneten Stellung und einer vollständig geschlossenen Stellung verstellt werden kann. Eine differenziertere Einstellung in mindestens drei oder mehr Stufen oder stufenlos ermöglicht jedoch, den Strömungswiderstand an das unterschiedliche Saugvermögen der Tiere anzupassen. Der Strömungswiderstand kann so gewählt werden, dass jedes Tier nach Aufnahme seiner Futtermittelration sein angeborenes Saugbedürfnis befriedigt hat.

In einer Ausgestaltung sind die Saugnuckelaufnahme und das Ventil mit einer Haltevorrichtung an der Befestigungseinrichtung gehalten, sodass sie werkzeuglos von der Befestigungseinrichtung getrennt werden können, wobei der Versorgungsanschluss und der Abzweiganschluss an der Befestigungseinrichtung verbleiben. Saugnuckelaufnahme und Ventil können insbesondere eine kompakte, gemeinsam entnehmbare Einheit bilden. Dies ermöglicht eine besonders einfache Demontage von Saugnuckel und Ventil zu Wartungs- und Reinigungszwecken. Versorgungsanschluss und Abzweiganschluss sowie die daran angeschlossenen Leitungen verbleiben an der am Futterstand befestigten Saugnuckelhalterung und müssen daher nicht angetastet werden.

In einer Ausgestaltung weist die Haltevorrichtung eine Klemmbefestigung auf. Die Klemmbefestigung kann beispielsweise einen Rast- oder Schnappverschluss oder einen oder mehrere Klemmhebel aufweisen. Dies ermöglicht ein einfaches Einsetzen und Lösen von Saugnuckelaufnahme und Ventil.

In einer Ausgestaltung weist die Saugnuckelhalterung ein Gelenk auf, sodass die Saugnuckelaufnahme schwenkbar an dem Futterstand gelagert ist. Dadurch kann der Saugnuckel auch bei unterschiedlich großen Kälbern stets in eine anatomisch günstige Position geschwenkt werden. Das Gelenk kann in einem Abstand von einer Schwenkachse, um die die Saugnuckelaufnahme schwenkbar ist, angeordnet sein. Es kann beispielsweise zylindermantelförmige oder kugelschalenförmige Gelenkflächen aufweisen.

Die oben angegebene Aufgabe wird ebenfalls gelöst durch den Tränkeautomaten nach Anspruch 12, der eine Saugnuckelanordnung nach einem der Ansprüche 1 bis 11, eine Versorgungsleitung und einen Anmischbehälter zum Anmischen eines flüssigen Futtermittels aufweist, der über die Versorgungsleitung mit dem Versorgungsanschluss verbunden ist. Zu den Merkmalen und Vorteilen des Tränkeautomaten wird auf die vorstehenden Erläuterungen verwiesen, die entsprechend gelten.

In einer Ausgestaltung weist der Tränkeautomat eine Pumpe auf, die mit dem Abzweiganschluss oder mit dem Versorgungsanschluss verbunden ist. Mit der Pumpe kann flüssiges Nahrungsmittel und/oder Reinigungsflüssigkeit zum Saugnuckel bzw. durch die Saugnuckelanordnung hindurch gefördert werden.

In einer Ausgestaltung ist der Abzweiganschluss an eine Abzweigleitung angeschlossen und die Pumpe ist eine Schlauchpumpe, die in der Abzweigleitung angeordnet ist. Mit der Schlauchpumpe kann eine im Anmischbehälter befindliche Flüssigkeit (flüssiges Nahrungsmittel oder Reinigungsflüssigkeit) über den Versorgungsanschluss zum Abzweiganschluss gefördert werden. Da bei einer Schlauchpumpe die Abzweigleitung bei Stillstehen der Pumpe automatisch geschlossen ist, kann bei geöffnetem Ventil jederzeit Flüssigkeit aus der Versorgungsleitung angesaugt werden. Ein gesondertes Absperrventil für die Abzweigleitung wird nicht benötigt.

In einer Ausgestaltung ist die Pumpe eine Kreiselpumpe, die in der Versorgungsleitung angeordnet ist. Bei stillstehender Kreiselpumpe kann ein Kalb auch bei dieser Anordnung Flüssigkeit über die Versorgungsleitung ansaugen. Die Abzweigleitung kann dann entweder mit einem gesonderten Ventil verschlossen werden, oder sie kann zum Anmischbehälter zurückgeführt sein, sodass Versorgungsleitung und Abzweigleitung gemeinsam eine geschlossene Ringleitung bilden.

Nachfolgend wird die Erfindung anhand von in Figuren dargestellten Ausführungsbeispielen näher erläutert. Es zeigen:
- Fig. 1: einen erfindungsgemäßen Tränkeautomaten mit einer Saugnuckelanordnung in einer schematischen Darstellung,
- Fig. 2: ein zweites Ausführungsbeispiel eines erfindungsgemäßen Tränkeautomaten mit einer Saugnuckelanordnung, ebenfalls schematisch,
- Fig. 3: eine erfindungsgemäße Saugnuckelanordnung in einer perspektivischen Ansicht,
- Fig. 4: die Saugnuckelanordnung aus Figur 4 in einer geöffneten Anordnung, ebenfalls in perspektivischer Darstellung,
- Fig. 5: einen Ausschnitt der Saugnuckelanordnung aus Figur 3 im Querschnitt.

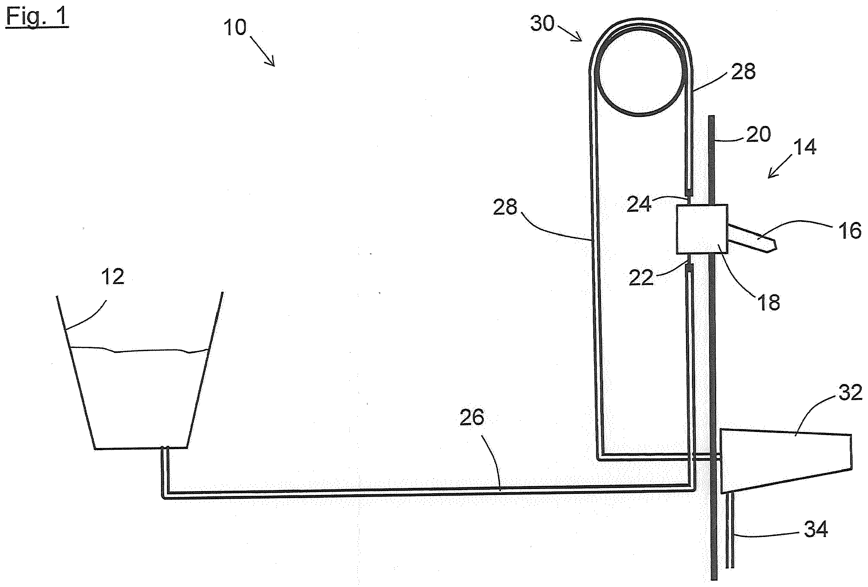

Figur 1 zeigt schematisch einen Tränkeautomaten 10 mit einem Anmischbehälter 12 und einer Saugnuckelanordnung 14. Die Saugnuckelanordnung 14 hat einen Saugnuckel 16, eine Saugnuckelhalterung 18, die an einer Wandung 20 des Tränkeautomaten 10 oder eines Futterstands befestigt ist. Die Saugnuckelhalterung 18 weist einen Versorgungsanschluss 22 und einen Abzweiganschluss 24 auf.

Der Versorgungsanschluss 22 ist über eine Versorgungsleitung 26 mit dem Anmischbehälter 12 verbunden. Der Abzweiganschluss 24 ist mit einer Abzweigleitung 28 verbunden, in der eine Schlauchpumpe 30 angeordnet ist. Die Abzweigleitung 28 führt über ein Auffangbecken 32 zu einem Abfluss 34. Das Auffangbecken 32 ist unterhalb des Saugnuckels 16 angeordnet und an der Wandung 20 befestigt. Bei einem Reinigungsvorgang im Bereich des Saugnuckels 16 heruntertropfende Reinigungsflüssigkeit wird in dem Auffangbecken 32 ebenso aufgefangen wie beim Saufen im Bereich des Saugnuckels 16 heruntertropfender Schleim oder Futtermittelreste.

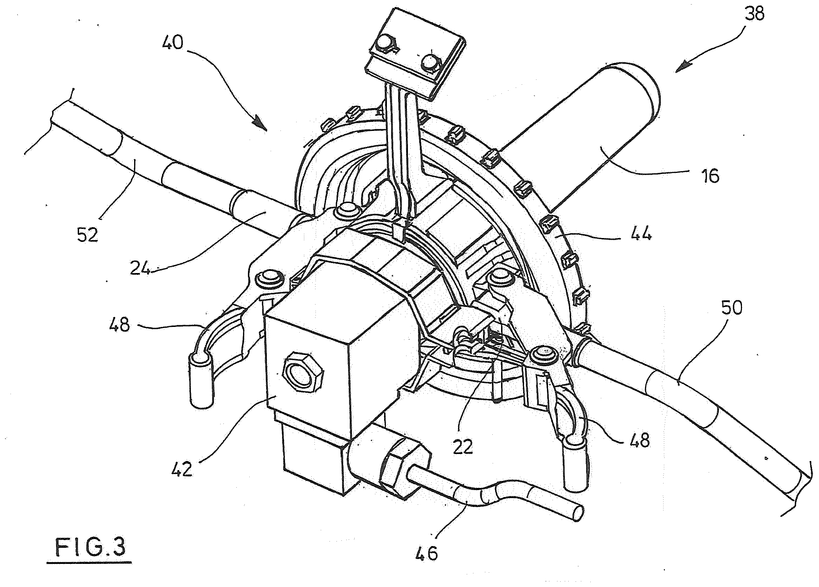

Innerhalb der Saugnuckelhalterung 18 sind der Versorgungsanschluss 22 und der Abzweiganschluss 24 miteinander verbunden. Zwischen den beiden Anschlüssen befindet sich außerdem ein nicht dargestelltes Ventil 42 (siehe Figuren 3 bis 5), das eine Verbindung zwischen dem Versorgungsanschluss 22 und dem Saugnuckel 16 freigeben und absperren kann.

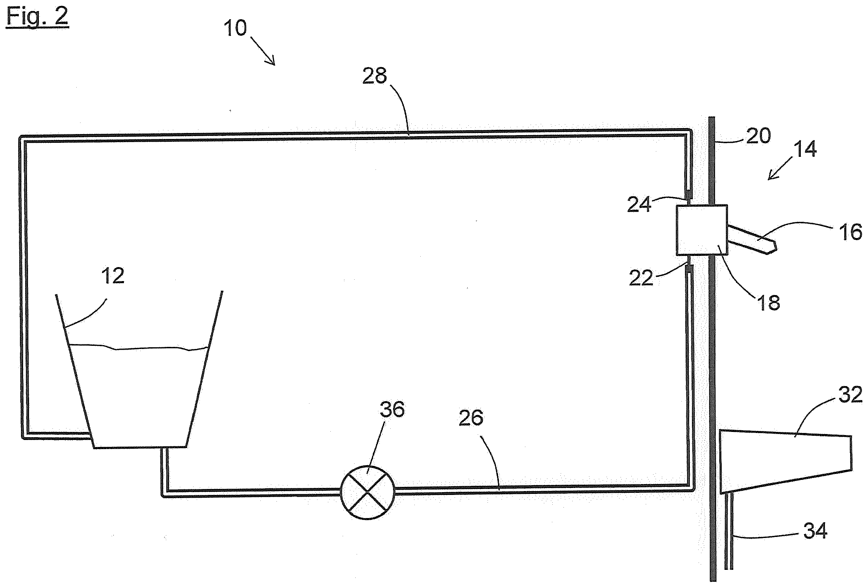

Im ebenfalls nur schematisch dargestellten Ausführungsbeispiel der Figur 2 führt die Abzweigleitung 28 nicht über das Auffangbecken 32 zum Abfluss 34, sondern zurück zum Anmischbehälter 12. Auf diese Weise entsteht eine geschlossene Ringleitung. Ein weiterer Unterschied zum Ausführungsbeispiel der Figur 1 besteht darin, dass in der Abzweigleitung 28 keine Pumpe angeordnet ist. Stattdessen befindet sich in der Versorgungsleitung 26 eine Kreiselpumpe 36, mit der Flüssigkeit aus dem Anmischbehälter 12 zum Versorgungsanschluss 22 gefördert werden kann.

Figur 3 zeigt eine Saugnuckelanordnung 38 mit einer Saugnuckelhalterung 40, einem Ventil 42, einer Befestigungseinrichtung 44 zur Befestigung der Saugnuckelhalterung 40 an einem Futterstand, einem Versorgungsanschluss 22 und einem Abzweiganschluss 24.

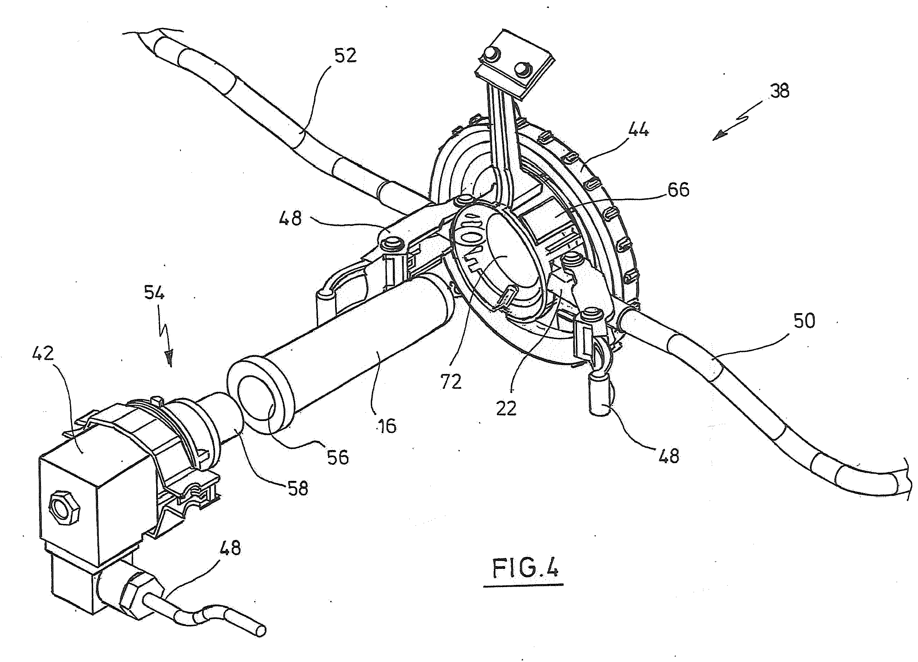

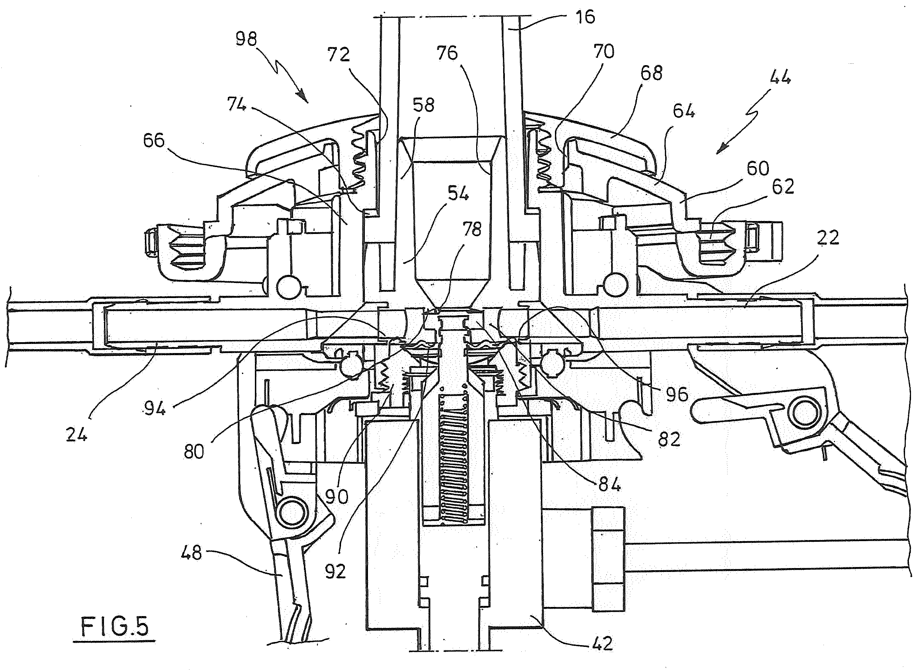

Das Ventil 42 ist ein Magnetventil, das eine elektrische Steuerleitung 46 aufweist. Eine Haltevorrichtung der Saugnuckelhalterung 40 weist zwei Klemmhebel 48 auf, mit das Ventil 42, eine Saugnuckelaufnahme 54 (siehe Figuren 4 und 5) und der Saugnuckel 16 an der Befestigungseinrichtung 44 gehalten sind.

Der Versorgungsanschluss 22 weist einen Anschlussstutzen auf, auf den eine Versorgungsleitung 50 aufgesteckt ist. Entsprechend weist der Abzweiganschluss 24 einen Anschlussstutzen auf, auf den eine Abzweigleitung 52 aufgesteckt ist.

Figur 4 zeigt die Saugnuckelanordnung 38 aus Figur 3 nach dem Öffnen der Halteeinrichtung und dem Entfernen des Ventils 42 mit Saugnuckelaufnahme 54 und Saugnuckel 16 von der Befestigungseinrichtung 44. Um die genannten Elemente wieder zusammenzufügen, wird der Saugnuckel 16 mit seiner rückwärtigen Öffnung 56 auf einen Schaftabschnitt 58 der Saugnuckelaufnahme 54, der eine Durchgangsöffnung 76 (siehe Figur 5) aufweist, aufgeschoben. Anschließend werden Saugnuckel 16, Saugnuckelaufnahme 54 und Ventil 42 gemeinsam von hinten in die Saugnuckelhalterung 40 eingesetzt und mit den beiden Klemmhebeln 48 fixiert.

Weitere Einzelheiten sind am besten in der Schnittdarstellung der Figur 5 erkennbar. Dort erkennt man, dass die Befestigungseinrichtung 44 aus mehreren Elementen zusammengesetzt ist: Ein äußerer Befestigungsring 60 weist eine Gewinde 62 auf, das mit einem komplementär ausgebildeten Gewinde an einem Futterstand verschraubt wird. Hierzu weist der Futterstand eine kreisförmige Öffnung auf, in die der äußere Befestigungsring 60 mit einem kugelschalenförmigen, inneren Ringabschnitt 64 eingesetzt wird. Ein rückwärtiges Teil 66 der Befestigungseinrichtung 44 wird mit einem Überwurfring 68 innerhalb einer inneren Öffnung 70 des äußeren Befestigungsrings 60 verschraubt. Der rückwärtige Teil 66 mit dem Überwurfring 68 ist dann in der inneren Öffnung 70 schwenkbar angeordnet, wobei der kugelschalenförmige, innere Ringabschnitt 64 und die damit zusammenwirkenden Elemente ein Gelenk 98 bilden.

Der rückwärtige Teil 66 der Befestigungseinrichtung 44 weist eine Durchgangsöffnung 72 auf, in der eine Stufe 74 ausgebildet ist. Die Saugnuckelaufnahme 54 hat einen im Wesentlichen kreiszylindrischen Schaftabschnitt 58 mit einer Durchgangsöffnung 76. Auf den Schaftabschnitt 58 ist die rückwärtige Öffnung 56 des Saugnuckels 16 aufgesteckt.

Die Durchgangsöffnung 76 in dem Schaftabschnitt 58 verjüngt sich an ihrem hinteren Ende konisch bis zu einem Öffnungsrand 78, an dem ein Ventilsitz 80 ausgebildet ist.

An dem rückwärtigen Teil 66 der Befestigungseinrichtung 44 sind der Versorgungsanschluss 22 und der Abzweiganschluss 24 ausgebildet. Der Versorgungsanschluss 22, der Abzweiganschluss 24 und die Durchgangsöffnung 76 münden in einen etwa scheibenförmigen Hohlraum 82, in dem ein verstellbares Ventilglied 84 des Ventils 42 angeordnet ist. In der gezeigten, geschlossenen Stellung des Ventils 42 dichtet das verstellbare Ventilglied 84 gegenüber dem Ventilsitz 80 ab. Der Versorgungsanschluss 22 und der Abzweiganschluss 24 sind gleichzeitig über den Hohlraum 42 miteinander verbunden, sodass eine zu Reinigungszwecken durch die Saugnuckelanordnung 40 hindurchgeleitete Reinigungsflüssigkeit die gesamte Anordnung einschließlich des verstellbaren Ventilglieds 84 bis unmittelbar an den Ventilsitz 80 heran erfasst. Lediglich der Saugnuckel 16 und die zum Teil innerhalb des Saugnuckels 16 angeordnete Saugnuckelaufnahme 54 werden bei geschlossenem Ventil 42 nicht von der Reinigungsflüssigkeit durchströmt.

Die Saugnuckelaufnahme 54, innerhalb der der Hohlraum 82 ausgebildet ist, ist mit einem Befestigungsabschnitt 90 des Ventils 42 verschraubt, wobei zwischen dem Befestigungsabschnitt 90 und der Saugnuckelaufnahme 54 eine Membran 92 des Ventils 42 dichtend eingeklemmt ist. Ventil 42 und Saugnuckelaufnahme 54 können als kompakte Einheit aus der Saugnuckelhalterung 40 entnommen werden, wie beschrieben nach dem Lösen der Klemmbefestigung mit den beiden Klemmhebeln 48.

Zwei in der dargestellten Schnittebene - also in ihrer Axialrichtung - annähernd dreieckige, elastische Dichtelemente 86, 88 dichten zwischen dem Versorgungsanschluss 22 bzw. dem Abzweiganschluss 24 und damit in Verbindung stehenden, korrespondierenden Öffnungen 94, 96 in der Saugnuckelaufnahme 54 ab.

### Liste der verwendeten Bezugszeichen:

- 10: Tränkeautomat
- 12: Anmischbehälter
- 14: Saugnuckelanordnung
- 16: Saugnuckel
- 18: Saugnuckelhalterung
- 20: Wandung
- 22: Versorgungsanschluss
- 24: Abzweiganschluss
- 26: Versorgungsleitung
- 28: Abzweigleitung
- 30: Schlauchpumpe
- 32: Auffangbecken
- 34: Abfluss
- 36: Kreiselpumpe
- 38: Saugnuckelanordnung
- 40: Saugnuckelhalterung
- 42: Ventil
- 44: Befestigungseinrichtung
- 46: Steuerleitung
- 48: Klemmhebel
- 50: Versorgungsleitung
- 52: Abzweigleitung
- 54: Saugnuckelaufnahme
- 56: rückwärtige Öffnung
- 58: Schaftabschnitt
- 60: äußerer Befestigungsring
- 62: Gewinde
- 64: innerer Ringabschnitt
- 66: rückwärtiges Teil
- 68: Überwurfring
- 70: innere Öffnung
- 72: Durchgangsöffnung
- 74: Stufe
- 76: Durchgangsöffnung
- 78: Öffnungsrand
- 80: Ventilsitz
- 82: Hohlraum
- 84: Ventilglied
- 90: Befestigungsabschnitt
- 92: Membran
- 86, 88: Dichtelemente
- 94, 96: Öffnungen
- 98: Gelenk

## Patentansprüche

1. Saugnuckelanordnung (38) für einen Tränkeautomaten (10) zur Fütterung von Nutztieren, insbesondere Kälbern, mit
• einer Saugnuckelhalterung (18), die eine Saugnuckelaufnahme (54) zur Aufnahme eines Saugnuckels (16), eine Befestigungseinrichtung (44) zur Befestigung der Saugnuckelhalterung (18) an einem Futterstand und einen Versorgungsanschluss (22) zur Verbindung mit einer Versorgungsleitung (50) aufweist,
• einem Ventil (42), mit dem eine Flüssigkeitszufuhr aus der Versorgungsleitung (50) zu dem Saugnuckel (16) freigegeben und gesperrt werden kann, und
• einem Abzweiganschluss (24) zur Verbindung mit einer Abzweigleitung (52), **dadurch gekennzeichnet, dass**
• das Ventil (42) und der Abzweiganschluss (24) in die Saugnuckelhalterung (18) integriert sind.

2. Saugnuckelanordnung (38) nach Anspruch 1, **dadurch gekennzeichnet, dass** die Saugnuckelaufnahme (54) einen mit einer Durchgangsöffnung (76) versehenen Schaftabschnitt (58) aufweist, auf den eine rückwärtige Öffnung (56) eines Saugnuckels (16) aufsteckbar ist.

3. Saugnuckelanordnung (38) nach Anspruch 1 oder 2, **dadurch gekennzeichnet, dass** das Ventil (42) ein verstellbares Ventilglied (84) und einen Ventilsitz (80) aufweist, der von der Saugnuckelaufnahme (54) gebildet ist.

4. Saugnuckelanordnung (38) nach Anspruch 2 oder 3, **dadurch gekennzeichnet, dass** der Ventilsitz (80) an einem Rand der Durchgangsöffnung (76) ausgebildet ist.

5. Saugnuckelanordnung (38) nach einem der Ansprüche 1 bis 4, **dadurch gekennzeichnet, dass** das Ventil (42) zwischen dem Abzweiganschluss (24) und dem Versorgungsanschluss (22) angeordnet ist.

6. Saugnuckelanordnung (38) nach einem der Ansprüche 2 bis 5, **dadurch gekennzeichnet, dass** die Saugnuckelanordnung (38) einen Hohlraum (82) aufweist, in den der Versorgungsanschluss (22), der Abzweiganschluss (24) und die Durchgangsöffnung (76) des Schaftabschnitts (58) münden.

7. Saugnuckelanordnung (38) nach Anspruch 6, **dadurch gekennzeichnet, dass** das verstellbare Ventilglied (84) in dem Hohlraum (82) angeordnet ist.

8. Saugnuckelanordnung (38) nach einem der Ansprüche 1 bis 7, **dadurch gekennzeichnet, dass** das Ventil (42) einen variablen Öffnungsquerschnitt aufweist, der stufenlos oder in mindestens drei Stufen einstellbar ist.

9. Saugnuckelanordnung (38) nach einem der Ansprüche 1 bis 8, **dadurch gekennzeichnet, dass** die Saugnuckelaufnahme (54) und das Ventil (42) mit einer Haltevorrichtung an der Befestigungseinrichtung (44) gehalten sind, so dass sie werkzeuglos von der Befestigungseinrichtung (44) getrennt werden können, wobei der Versorgungsanschluss (22) und der Abzweiganschluss (24) an der Befestigungseinrichtung (44) verbleiben.

10. Saugnuckelanordnung (38) nach Anspruch 9, **dadurch gekennzeichnet, dass** die Haltevorrichtung eine Klemmbefestigung aufweist.

11. Saugnuckelanordnung (38) nach einem der Ansprüche 1 bis 10, **dadurch gekennzeichnet, dass** die Saugnuckelhalterung (18) ein Gelenk aufweist, so dass die Saugnuckelaufnahme (54) schwenkbar an dem Futterstand gelagert ist.

12. Tränkeautomat (10) mit einer Saugnuckelanordnung (38) nach einem der Ansprüche 1 bis 11, einer Versorgungsleitung (50) und einem Anmischbehälter (12) zum Anmischen eines flüssigen Futtermittels, der über die Versorgungsleitung (50) mit dem Versorgungsanschluss (22) verbunden ist.

13. Tränkeautomat (10) nach Anspruch 12, **gekennzeichnet durch** eine Pumpe, die mit dem Abzweiganschluss (24) oder mit dem Versorgungsanschluss (22) verbunden ist.

14. Tränkeautomat (10) nach Anspruch 13, **dadurch gekennzeichnet, dass** an den Abzweiganschluss (24) eine Abzweigleitung (52) angeschlossen ist und die Pumpe eine Schlauchpumpe (30) ist, die in der Abzweigleitung (52) angeordnet ist.

15. Tränkeautomat (10) nach Anspruch 13, **dadurch gekennzeichnet, dass** die Pumpe eine Kreiselpumpe (36) ist, die in der Versorgungsleitung (50) angeordnet ist.
